# EUROPEAN PATENT APPLICATION

(11) **EP 3 054 739 A1**
(43) Date of publication of application: **10.08.2016**
(21) Application number: 15154324.6
(22) Date of filing: 09.02.2015
(51) Int. Cl.: H04W 76/00, H04M 1/725, G08B 25/01

(54) **Prosthesis apparatus and method for generating and receiving a call**

(71) Applicant: Bernot, Gerhard, 78464 Konstanz (DE)
(72) Inventor: Bernot, Gerhard, 78464 Konstanz (DE)
(74) Representative: Maiwald Patentanwalts GmbH

(57) **Abstract**

A prosthesis apparatus (100), comprising: a sensor input device (103); an audio output device (104) and an emergency engine (101) is provided wherein the emergency engine (101) is connected to the audio output device and to the sensor input device (103), wherein the sensor input device (103) is adapted to receive a sensor input signal from a sensor (122) and to convert the sensor input signal into a corresponding preconfigured sensor input data packet (124), wherein the emergency engine (101) is adapted to determine a preconfigured emergency scenario from the received preconfigured local audio input data packet (125) and/or from the received preconfigured sensor input data packet (124) and to compose an emergency message data packet sequence (129) comprising a selection of the preconfigured sensor input data packet (124) and a preconfigured filling data packet (130) associated with the emergency scenario in order to compose an emergency message in accordance with the detected preconfigured emergency scenario and in accordance with a preconfigured user profile and wherein the audio output device (104) is adapted to convert the emergency message packet sequence (129) into a remote audio output signal (116) and to provide the remote audio output signal (116) to a remote audio generator (115).

## Description

### Field of the invention

The present invention relates to medical technology. In particular, the present invention relates to a prosthesis apparatus and a method for generating and receiving a call.

### Background

Emergency call numbers like 112, 911 are widely known and uniquely used almost worldwide. At least in Europe the emergency number 112 has been established as the number to be called in emergency situations. Calling such a number will transfer the caller to an emergency call center where an operator or supporter will pick up the call and arrange the required help. Calling an emergency number usually requires the caller to be able to describe the actual situation, in order to allow the operator to select the appropriate rescuing steps. In most cases a human operator will handle the case based on a voice communication. However, there might be situations where a voice or audio communication between a person who needs help and the rescue operator might not be possible. For example, an accident that happened disabled a user for using his voice, or the user and the operator use a different languages or a person needs help who may be deaf, dumb or deaf-mute and therefore disabled to use a voice channel to set up the emergency message.

Especially to allow disabled people to set up emergency calls, recently experiments have been made with emergency calls via fax, SMS (Short Message Service) or applications on a smartphone. These new communication media are useful if the appropriate infrastructure is available and the rescue operator has its rescue call center equipped with corresponding technical facilities to receive a non-voice emergency call, for example via fax or SMS and the user also must have access to an appropriate communication means. But it might even be difficult to find compatible versions if the appropriate services are available.

Emergencies can also happen in remote locations such as deserts and mountains, where certain type of communication may not be possible. Emergency calls based on IP (Internet Protocol) with video and text messages may be described on the web page http://www.reach112.eu/view/en/index.html.

### Summary of the invention

There may exist a need to provide a more efficient way for communicating.

According to an aspect of the present invention, a prosthesis apparatus and a method for generating and receiving a call, in particular an emergency call, are described.

The subject-matter of the invention is defined in the independent claims. Further embodiments of the invention are defined in the dependent claims and the description below

According to an aspect of the present invention, a prosthesis apparatus is described comprising a sensor input device, an audio output device and an emergency engine. The emergency engine is connected to the audio output device and to the sensor input device. The sensor input device is adapted to receive a sensor input signal from a sensor or from a plurality of sensors and to convert the input signal into a corresponding preconfigured sensor input data packet. Generating a preconfigured sensor input data packet may allow converting signals received via a peripheral device into a limited predefined number of preconfigured data packets which may be processed by the emergency engine in a unified and predetermined way. In other words, the environment signals or the sensor input signals are converted in a unified basis which can be understood and preprogrammed in the emergency engine and therefore may make it possible to process the data with an electronic device such as a processor.

The emergency engine is adapted to determine a preconfigured emergency scenario from the received preconfigured sensor input data packet. Bringing the environmental signals to a unified basis of data packets may make it possible to determine a preconfigured scenario, such as a preconfigured emergency scenario. For example, a pattern recognition device could be used to make such an automatic determination of the present scenario indicated by signals from the environment.

The emergency engine is further adapted to compose an emergency message data packet sequence comprising a selection of the preconfigured sensor input data packet and a preconfigured filling data packet associated with the emergency scenario in order to compose an emergency message. The emergency message may be in accordance with the detected preconfigured emergency scenario and in accordance with a preconfigured user profile. In other words, the emergency engine may be adapted to compose a sentence comprising information gathered by the sensor input device. The sensor input device may only be able to provide measurement values such as a temperature or a position. This sensor data may only provide a meaning after putting it into a context, such as an emergency message. Providing an emergency message can inform the third party about an actual emergency scenario in such a way, that the third party understands the message substantially without having to ask the sender of the message in order to initiate the necessary steps appropriate for the present scenario.

Taking into account a preconfigured user profile may help protecting data stored and gathered from the emergency engine and the sensor input device. In other words, the emergency engine can store a large quantity of personal data or generate personal health data. In situations where very private data of a user may not be necessary for the present emergency situation, such data may not be provided if the emergency engine is configured in such a way by the user.

The prosthesis apparatus further comprises an audio output device which is adapted to convert the composed emergency message packet sequence into a remote audio output signal and to provide the remote audio output signal to a remote audio generator. The remote audio generator may be a generator used to generate an audio signal that can be detected by the human ear. In order to communicate with a remote operator, a remote audio generator may have an appropriate amplifier or a communication network in order to allow an appropriate communication with the emergency operator.

In one example the sensor input device comprises an audio input device for receiving and analysing remote incoming calls. Such an audio input device may allow an emergency operator to call into the emergency engine and make some requests or execute some commands. In another example an audio input device may have two terminals. A remote terminal to be connected with a remote audio source. A local terminal to be connected with a local audio source. The remote terminal may be used as a sensor for incoming calls. Also an emergency button can be a sensor for detecting an emergency situation.

According to another aspect of the invention a prosthesis apparatus comprises a sensor input device, a protocol device and an emergency engine. The emergency engine is connected to the protocol device and to the sensor input device. The sensor input device comprises an incoming call detector, wherein the incoming call detector is adapted to detect at least on of an incoming voice call and a SMS. The emergency engine is adapted to activate a data connection if the incoming call detector detects an incoming call and/or a SMS.

Setting up a data connection after an incoming call has been detected may make it possible to remotely establish a data connection for devices such as mobile devices that are not permanently and directly reachable via a data connection such as an IP connection. In other words, an Internet connection used by a mobile phone or by a mobile device may not be reachable externally or remotely since the addresses of the connection may not be routed in a public data network. An incoming voice call or incoming SMS however can be detected by a mobile phone. By reacting to an incoming call with the emergency engine a data connection or internet connection can setup remotely. This data connection may be used remotely. In an example the emergency engine initiates a remote data communication and/or activates the remote audio connection upon an incoming call with unknown or specified calling number or upon an incoming SMS. Whether an audio connection, a data connection or both is setup after an incoming call or an incoming SMS has been detected is configurable, for example via the configuration device. The incoming call detector is a specific sensor that may be connected to the sensor input device. Further sensor input signals of other sensors for example may have to be analyzed and fulfill a predetermined requirement before the emergency data connection will be setup.

According to another aspect of the present invention, a method for generating and receiving a call, in particular an emergency call, is provided. The method provides for receiving a sensor input signal from a sensor, for example via a sensor input device. A sensor signal can also be an incoming voice call which can be detected by an appropriate sensor. The sensor input signal is converted into a corresponding preconfigured sensor input data packet. The method further provides for determining from the received preconfigured sensor input data packet a preconfigured emergency scenario. After the preconfigured emergency scenario has been determined, an emergency message data packet sequence can be composed, comprising at least a selection of the preconfigured sensor input data packet and a preconfigured filling data packet associated with the emergency scenario in order to compose an emergency message in accordance with the detected preconfigured emergency scenario and in accordance with the preconfigured user profile. The method further provides for converting the emergency message packet sequence into a remote audio output signal and providing the audio output signal to a remote audio generator. The method may for example be used for notifying a remote operator.

In one example of the present invention, another method for generating and receiving a call is provided. In this example the method provides for receiving local audio input signal from a local audio source and converting the received local audio input signal into a corresponding preconfigured local audio input data packet. The method further provides for receiving a sensor input signal from a sensor, for example via a sensor input device. The sensor input signal is converted into a corresponding preconfigured sensor input data packet. The method further provides for determining from the received preconfigured local audio input data packet and/or from the received preconfigured sensor input data packet a preconfigured emergency scenario. After the preconfigured emergency scenario has been determined, an emergency message data packet sequence can be composed, comprising a selection of the preconfigured local audio input data packet, the preconfigured sensor input data packet and a preconfigured filling data packet associated with the emergency scenario in order to compose an emergency message in accordance with the detected preconfigured emergency scenario and in accordance with the preconfigured user profile. By converting the emergency message packet sequence into a remote audio output signal and providing the audio output signal to a remote audio generator, for example a remote operator can be notified in substantially natural voice.

According to another aspect of the present invention, a method for generating a data connection is provided. The method provides for receiving a sensor input signal from an incoming call detector. In an example the sensor input signal is converted into a corresponding preconfigured sensor input data packet. The method further provides for determining from the received preconfigured sensor input data packet a preconfigured emergency scenario. Since the incoming call detector has been activated the emergency scenario of monitoring may be determined. After the incoming call or incoming SMS has been detected a data connection is established. In an example the data connection is established with a call center. In an example in addition to the data connection an audio connection can be established. As soon as the data connection is established a remote operator can access user data or the emergency engine and may control actuators at the point of interest.

According to another aspect of the present invention, a computer-readable medium comprising a program code which when being executed by a processor is adapted to carry out the method for generating or receiving a call and/or the method for generating a data connection is provided.

A computer-readable medium may be a floppy disk, a hard disk, an USB (Universal Serial Bus) storage device, a RAM (Random Access Memory), a ROM (Read Only Memory) or an EPROM (Erasable Programmable Read Only Memory). A computer-readable medium may also be a data communication network, e.g. the Internet, which may allow downloading a program code. The program code may be provided as an application based on a variety of computer operating systems.

According to another aspect of the present invention, a program element is described, which when being executed by a processor is adapted to carry out the method for generating or receiving a call and/or the method for generating a data connection.

Even if the prosthesis apparatus is described in the context of this text as an aid for an emergency scenario, it should be borne in mind, that such a prosthesis apparatus can also be used for other scenarios of the daily life, where a synchronous communication with a third party may be desired, such as calling a call center or ordering food, such as a pizza.

It may be seen as an aspect of the invention, that the prosthesis apparatus detects preconfigured situations by analyzing signals provided from a sensor. In an emergency case, detecting certain states of a sensor connected to the sensor input device and/or of a plurality of sensors, in particular the combination thereof, can help to automatically trigger an emergency call or any other call or data connection if for example the user of the device is not able any more to set up the emergency call, for example if he or she lost the conscious. In one example, the sensor input device may receive the sensor input signal from a human machine interface, for example from a touch screen or an emergency button.

Using an audio output signal may allow for a synchronous communication or a real time communication with an emergency operator. In other words, a ping-pong communication may be possible and by using synchronous communication channels for the audio signal, such as circuit switched communication channels, direct lines or a dedicated channel, such as a dedicated radio channel, may ensure that the audio signal reach the operator within a deterministic time interval, in a deterministic order and may not be delayed by packet diversion methods that are used in pure data communication channels. Latencies that could appear by using technologies like Voice over IP (VoIP, Voice over the Internet Protocol) may not be appropriate in an emergency scenario where the number of requests necessary to clarify the situation should be limited. By using a pure voice channel, an emergency call may be set up in a large number of cases, since providing a pure audio communication has been established in many years and in many countries. Providing a voice output can be communicated via any voice communication system, for example via a PSTN network (public switched telephone network) or via a radio network used by walkie-talkies. Systems such as eCall or other sophisticated emergency call systems may need a special infrastructure that may not be available worldwide. Some may require a special decoder and a D-channel. Emergency call with fax may require a fax number and a fax machine. An emergency call via SMS may require a SMS number and a SMS (Short Message Service) receiver device. Furthermore, SMS may not provide a synchronous communication since the arrival time of the messages is not deterministic and may depend on the load of the network.

The prosthesis apparatus can be implemented as an application of a smartphone providing the necessary interface signals. Providing a synchronous communication also allows the remote operator or supporter to give a feedback either via the pure voice channel or a data channel, if available. In one example the prosthesis apparatus can receive an audio input from a remote source and can be controlled by the remote source. Therefore, the prosthesis apparatus can be used as a lone worker protection and being managed by the remote operator. The prosthesis apparatus can also be used in a scenario of finding buried people, for example after a mine or avalanche accident. The prosthesis apparatus can be used as a search and rescue device since the audio output device can be adapted in such a way to provide an acoustical alert and feedback. The prosthesis apparatus can be designed in such a way that the requirements of German TR Notruf (Technische Richtlinie Notrufverbindungen, technical guideline emergency connections, §108, section 3 of telecommunication law Telekommunikationsgesetz (TKG) including Verordnung über Notrufverbindungen (NotrufV, provision of emergency connections)) for mobile applications are met. A structured dialog, multilingual dialog, for example by an online translator or a direct feedback from a remote operator to the user site can be offered with the prosthesis apparatus.

The user of the prosthesis apparatus can see or feel the feedback from the remote operator since the prosthesis apparatus uses a real time communication. A direct request of position information is possible by enabling the remote operator to request the sensor input data which have not been provided or which he needs to understand the present situation at the point of interest. By providing real time communication, an almost real time request or querying of the actual sensor values and location data can be provided to the remote operator. By analyzing the sensor input data, for example the sensor input data of a position determining system, an automatic language selection or an automatic translation can be provided. By providing corresponding buttons manual language selection by the user can be offered, too. The language may also be selected by the remote operator or emergency operator if the permission is configured in the user profile. The feedback channel to the prosthesis apparatus may provide the direct control of actuators by the remote operator, in order to execute some mechanical interaction with the user where the user is not able anymore.

Since the communication with the operator is made by an audio output device, in particular by an analog audio output device, any communication network such as any analog or digital network or any radio transceiver or mobile handsets can be used for communicating with the operator. Even if digital data telecommunication services such as VoIP are available, a choice can be made between analog, digital or VoIP telephone in order to adapt to the availability of communication infrastructure. Also video conference telecommunication may be possible by appropriate sensor devices connected to the sensor input device. By using such sensors it could also be possible to use PC-based voice and video communication tools such as a video conferencing system. Also video monitoring with an audio interface may be possible.

Since a pure audio communication channel can be used, a prosthesis apparatus may be independent of different standards or revisions of the telecom infrastructure and may be independent from the used technology, for example GSM (Global System for Mobile Communications), LTE (Long Term Evolution) or UMTS (Universal Mobile Telecommunications System) and substantially all voice communication systems and handsets may be used. With an appropriate amplifier also direct atmospheric air communication in short distance may be possible, for example up to 100 feet or meter. Allowing for direct audio communication in emergency conditions may make the prosthesis apparatus ready to be used with water, snow and entombment.

The sensor input device may allow to connect the prosthesis apparatus to a plurality of sensors. For example locations sensors can be used in order to provide precise location information outdoor as well as indoor. An example of a location sensor may be GNSS receivers (Global Navigation Satellite System), such as GPS, Galileo, GLONASS with standard and raw data processing. WAAS (Wide Area Augmentation System) and EGNOS (European Geostationary Navigation Overlay Service) correction data can be received by connected satellite receiver or terrestrial data communication link.

If a very exact positioning is needed further wired or wireless IMUs (Inertial Measurement Units) are used to measure velocity, orientation and gravitational forces by using a combination of accelerometers, gyroscopes, magnetometers, barometers, odometers, cameras, RFID reader, RFID beacons and QR (Quick Response) codes, barcodes and artificial magnetic field beacons, etc.

The prosthesis apparatus may allow people who can't hear or speak at all or people who do not know the language of the remote operator to communicate with the operator supported by the prosthesis apparatus. In order to allow the secure recognition of the audio signals, the used audio input data packets and/or sensor input data packets are limited and preconfigured. The packets are predefined and they are particularly chosen for the planned use of the prosthesis apparatus. Thus, structured multilingual and location based messages can be exchanged in a dialog with the supporter. Also information can be exchanged with actuators or sensors on a predefined packet basis.

In situations where no internet protocol (IP) connection or other data communication is available, direct synchronous point-to-point audio frequency communication between a remote operator and a user who can't speak or understand is possible. A list of preconfigured questions, for example a set of checklists, each with up to 1500 questions or subquestions, where each question has a question type (single or multiple choice, etc.) and a predefined list of possible answers, represented in text and optionally represented as an image, could be stored in the prosthesis apparatus in order to receive detailed information about the emergency scenario. The supporter can select at least one of the stored checklists with predefined commands based on a natural language dialog and/or via a data communication. By converting state information into an audio output signal which is transferred as pure audio signal, no special equipment is required for the remote operator except a radio, mobile and/or telephone handset.

In case of short distance communication over the atmospheric air, the supporter may only require to listen, to speak or to generate a sound in order to communicate with the user of the prosthesis apparatus. The supporter may not need additional equipment that has to be compatible with the equipment used by the user. The prosthesis apparatus may substantially be the only user equipment that has to be carried in order to communicate with the supporter.

The prosthesis apparatus identifies audio signal frequency patterns and calculates absolute and relative position, speed, distance and direction to supporters, sound sources and sound reflection based on audio and low frequency signal in and output. In other words, the prosthesis apparatus helps users with hearing and/or visual impairment to detect and/or identify audio sources and reflection for better orientation.

If available GNSS and sensor data from IMUs, RFID beacons, camera, artificial magnetic beacons, GNSS correction data, preconfigured and online updated georeferenced position signal of the registered supporters will be used for calculation.

In short distance communication over the atmospheric air, distance from the supporter to the prosthesis apparatus is estimated by the sound level and the elapsed time for sound reflection. Speed is calculated by the change of the average sound level and the shift of frequency or in case of sound reflection with the difference of the relative distance. The direction is calculated by the time delay of at least 2 audio signal input lines. In other words, the prosthesis apparatus is adapted to analyze from a received audio spectrum characteristics of the received speech of the supporter. The audio input device can make such analysis of the received direct speech of the supporter. The determined characteristics help with the speech to text conversion. For direction calculation the audio input device has two input ports or a stereo port for receiving the sound signal of the supporter. A piezo sound generator can be used as sound source to excite a voice signal that can be received with a stereo microphone. In this way it may be possible to detect buried people.

In remote communication, position, speed, distance and direction can be calculated and provided. In case of online data connections terrestrial GNSS correction data and georeferenced data of the supporters can be updated.

The prosthesis apparatus can be used worldwide with substantially no language barriers over different physical media. Communication can be made by any analog audio connection, can be made over the atmospheric air with a short distance and can be used in snow surfaces and avalanche conditions as well as in water conditions with an adapter. Thus, the prosthesis apparatus can be used over analog phone lines, analog radio sets, over digital radio sets, over emergency telephones and SOS boxes. Also elevator emergency systems can be used in combination with the prosthesis apparatus, a GSM voice connection, with or without VoIP can be used as well as any international language. The remote audio generator can generate the frequency spectrum and couple it into an appropriate communication channel or communication line. The communication channel can be direct transmission by air pressure excited by a loudspeaker, coupling into a telephone or converting into a digital transmission frame used for long distance transmission, e.g. over a telecommunication channel.

The sensor input device can provide an interface to a single or a plurality of sensors, for example location based sensors such as a GNSS (Global Navigation Satellite System) sensor, for example GPS, EGNOS, GLONASS, WAAS. If no GNSS reception may be possible, beacons with GSM, LTE, Bluetooth or WLAN (Wireless Local Area Network), RFID, NFC (Near Field Communication), sound and ultrasound positioning, artificial magnetic field detection could be used. Actors or actuators could be synchronous remotely switched devices that allow switching on and off of states, such as remotely operated relays, synchronous remote control of gears or any other actors.

According to a further aspect of the invention the prosthesis apparatus further comprises an audio input device, wherein the emergency engine is connected to the audio input device. The audio input device is adapted to receive a local audio input signal from a local audio source and to convert the received local audio input signal into a corresponding preconfigured local audio input data packet. In an example, the audio input device may be adapted to receive an analog audio signal from a user, to analyze the signal, in particular the frequency spectrum of the signal and to convert the received local audio input signal into a preconfigured local audio input data packet or a plurality of preconfigured local audio input data packets which represent in the best way the received local audio input signal. Such a conversion from a signal to corresponding data packets may be made by a sound and speech recognition device.

In order to optimize the robustness and reliability of the prosthesis apparatus the dialog context of the recognized sound pattern is dynamically switched to one set of the preconfigured local audio input data packets, depending on sensor data, user and operator input and valid checklist answer dialog sequence.

The prosthesis apparatus may provide a plurality of questions and a set of possible answers or sub-questions activated by sensor data, operator or user interaction. Each question-answer dialog can robustly decode one out of approximately 30 valid audio input signals.

In an example the user can indicate which language or sound shall be decoded. The selection can be made by a keyboard or a sound command. For example an input audio decoder can be selected from the group of audio decoders consisting of an English decoder, a German decoder, a French decoder, an Italian decoder, a decoder used in the environment of sound of birds, a decoder used in the environment of motorbikes, a decoder used in the environment of cars. The decoder may be used in the audio input device. The user can select the set of valid local audio input packets by selecting a corresponding decoder.

According to another aspect of the present invention, the audio input device of the prosthesis apparatus is further adapted to selectively receive a remote audio input signal from a remote audio source and to convert the received remote audio input signal into a corresponding preconfigured remote audio input data packet. The emergency engine is further adapted to use at least a first portion of the preconfigured remote audio input data packet as a control information for controlling the emergency engine.

The selection between remote audio input and local audio input can be made automatically, for example by channel activity detection or detection of an incoming call by ringing detection. Therefore, it may be possible that the prosthesis apparatus detects whether the user uses the local audio input signal or an operator uses the remote audio input signal. The prosthesis apparatus can automatically switch to the corresponding active channel. Detecting and converting the remote audio input signal into a remote audio input data packet allows recognizing commands from a remote operator. Thus, it may be possible to control the prosthesis apparatus via a pure voice or a pure audio communication channel. No special equipment may be necessary using a compatible protocol and the prosthesis apparatus can be used independently or autarkic.

It is to be noted that the terms "local" sound generator and "local" sound source refer to sound or audio devices which are intended to be used by a local user. The terms "remote" sound generator and "remote" sound source refer to sound or audio devices which are intended to be used by a remote user. The terms do not exclude a solution where local as well as remote devices are used locally at the prosthesis apparatus. The remote devices may be adapted to couple an analog audio signal in a corresponding communication interface. Such a communication interface may be a microphone and/or loudspeaker of a telephone or an input to a megaphone. In another example the interface may be a voice channel of a mobile or fixed communication network.

According to another aspect of the present invention, the prosthesis apparatus further comprises an actuator output device. The emergency engine is connected to the actuator output device and the emergency engine is further adapted to determine from the preconfigured local audio input data packet and/or from the preconfigured remote audio input data packet a control packet for the actuator output device. The actuator output device is adapted to convert the control data packet into a control signal and to provide the control signal to the corresponding actuator.

The sensor input device may be an interface device for connecting a sensor to the prosthesis apparatus. A sensor may be a mechanical - electrical converter or a measuring device converting a physical variable into a value.

The actuator output device is an interface device for providing an output signal to an actuator and to connect an actuator to the prosthesis device. The actuator output device may be realized as a device driver for controlling the corresponding actuator. An actuator can be an electrical-mechanical converter which can be used to convert electrical energy into mechanical energy.

According to another aspect of the present invention, the emergency engine of the prosthesis apparatus is further adapted to compose a notification message data packet sequence comprising at least a second portion of the preconfigured remote audio input data packet. The notification message may be a notification that is to be provided to the user and composed by a remote operator in order to provide the notification message data packet sequence to the audio output device, at least to the local part of the audio output device. The audio output device is further adapted to convert the notification message data packet sequence in a local audio output signal and to selectively provide the local audio output signal to a local audio generator.

The selection may be made by a switch which is automatically switched depending on an activity of a corresponding channel. For example, if a remote audio output signal is provided, the signal is transferred to the remote audio generator and if the local notification message is provided, the signal is transferred to the local audio generator. The audio output device may have a local output port or terminal and a remote output port or terminal. Both, the audio input device and/or the audio output device can comprise a communication line or a communication interface in order to transmit or receive an audio signal to/from a remote operator.

According to another aspect of the present invention, the prosthesis apparatus comprises a configuration device. The configuration device is adapted to configure at least one of the preconfigured user profile, the preconfigured emergency scenario and/or logging information.

In an example the configuration device is connected to the communication interface or to the communication line that leads to a remote location and/or to a communication line for receiving remote data from a remote location.

The configuration device can be configured by the user via a configuration interface or an input/output device such as a touch screen and may allow a user to define which information and under which condition this information is to be provided to a remote operator. In other words the rules for providing information is configured with the configuration device. The configuration device may also store different preconfigured emergency scenarios in order to allow composing an emergency message and/or a notification message based on information provided by the sensor input device and/or provided by the audio input device. Furthermore, the configuration device can be used for logging information, e.g. in a log file. Since the configuration device may be used as a central component, all information passes the configuration device. Therefore, the messages passing the configuration device and/or messages selected by the configuration device may be stored in a list of logging information. In an example the logging information may be used to determine how long it takes from setting up the call to the remote operator or rescue center to the final rescuing act of the user. The configuration device may comprise a filter in order to select the information that is intended to be provided in certain emergency scenarios.

According to another aspect of the present invention, the prosthesis apparatus comprises a filter, wherein the filter can be used for determining the preconfigured emergency scenario, the preconfigured user profile and for determining the logging information. Using a filter may allow collecting all available information and only providing the required and desired information to a remote operator. The filter may allow quick processing of available information and allow to determine which information is to be provided.

According to another aspect of the present invention, the prosthesis apparatus, and in particular the audio input device and/or the audio output device, comprises a communication interface and/or a communication line.

The communication interface allows to transport the audio signal over a long distance. A communication line may also allow connecting the prosthesis apparatus to a wired or wireless communication network and may also allow using the prosthesis apparatus in a location which is far away from the remote operator.

According to another aspect of the present invention, the communication interface and/or the communication line comprise/comprises at least one dedicated voice channel for providing the audio output signal of the remote audio generator to a remote location and/or for receiving the remote audio input signal from a remote location.

A voice channel may be a commonly used communication interface. A voice channel may be provided by an analog telephone, by a radio system or by a walkie-talkie. The prosthesis apparatus can directly be connected to any voice channel independent from the fact of how the voice channel has been set up. In an example the generated voice spectrum can directly be coupled into the communication line. Even a megaphone can be used as a voice channel since the remote audio source and/or the remote audio generator receive/generate a physical spectrum of a voice signal. Therefore prosthesis apparatus can be used as it is without any specific protocols. One remote interface may be the physical interface where the audio information is available as a function of air pressure and/or a frequency spectrum.

According to another aspect of the present invention, the configuration device of the prosthesis apparatus is at least one configuration device selected from the group of configuration devices consisting of a key pad with haptic feedback, a touch display and a head-up display. The configuration device can also be used as a sensor, for detecting an emergency scenario, e.g. as an emergency button or a visual checklist for entering the actual situation in a checklist.

The configuration device offers a user to communicate with the prosthesis apparatus in different ways. For example, if a touch display is connected to the configuration device, the prosthesis apparatus can also be used in loud environment. The touch display can also be used to set up an emergency call if the touch display is used as a sensor and a preconfigured sensor input data packet is generated from the input of the touch display.

According to another aspect of the present invention, the prosthesis apparatus further comprises at least one sensor connected to the sensor input device and for providing the sensor input signal. The sensor can be selected from the group of sensors consisting of a touch display, a touch display showing emergency scenario icons, a position sensor, e.g. a satellite receiver, accelerometers, gyroscopes, a magnetic field sensor, a climate sensor, for example a temperature sensor, a barometer, a camera, a piezoelectric force transducer, an electromagnetic coil, a smoke detector and a body sensor and a magnetic switch. The different sensors or the plurality of sensors allow receiving a plurality of environment information. The more information provided to a remote operator the better the emergency scenario may be analyzed by a remote operator. By providing specific information about the emergency scenario, a rescue team may be well prepared and may not lose time by analyzing the emergency scenario.

According to another aspect of the present invention, the prosthesis apparatus further comprises at least one actuator connected to the actuator output device and for receiving the control signal, wherein the actuator is selected from the group of actuators consisting of an ultrasonic sender, an electromechanical converter, a display, a switch and a light.

The actuator allows an operator to execute a limited number of actions without being present in the remote location. In cases where a user may not be able to input necessary information, a remote operator may by using actuators can clarify the emergency situation at the point of interest.

According to another aspect of the present invention, at least one of the sensor input device, the audio input device, the audio output device, the actuator output device and/or the configuration device comprises a wireless interface. The wireless interface may allow easily connecting peripheral devices such as sensors or actuators to the prosthesis apparatus. One example of a wireless interface is Bluetooth. A lot of actuator and sensor devices are available that support a Bluetooth interface and therefore may easily be connected to the prosthesis apparatus. Complicated wiring may be prevented. Also a small design for the prosthesis apparatus may be possible.

According to another aspect of the present invention, the prosthesis apparatus is adapted as at least one of a head phone, an in-ear apparatus, an embedded system and/or a telephone.

Integrating the prosthesis apparatus in a headphone or an in-ear apparatus may make it easy for a user to carry the prosthesis apparatus.

It has also to be noted that aspects of the invention have been described with reference to different subject-matters. In particular, some aspects have been described with reference to apparatus type claims, whereas other aspects have been described with reference to method type claims. However, a person skilled in the art will gather from the above and the following description that, unless other notified, in addition to any combination between features belonging to one type of subject-matter, also any combination between features relating to different types of subject-matters is considered to be disclosed with this text. In particular, combinations between features relating to the apparatus type claims and features relating to the method type claims are considered to be disclosed.

These and other aspects of the present invention will become apparent from and elucidated with reference to the embodiments described hereinafter.

### Brief description of the drawings

Fig. 1 shows a block diagram of a prosthesis apparatus according to an exemplary embodiment of the present invention.
Fig. 1a shows an emergency message data packet sequence according to an exemplary embodiment of the present invention.
Fig. 2 shows a block diagram for an end-to-end scenario between a user and a supporter according to an exemplary embodiment of the present invention.
Fig. 3 shows a more detailed block diagram of a communication scenario between a user and a supporter according to an exemplary embodiment of the present invention.
Fig. 4 shows a mask of a configuration device of the prosthesis apparatus according to an exemplary embodiment of the present invention.
Fig. 5 shows a flow-chart of a method for generating a call according to an exemplary embodiment of the present invention.
Fig. 6 shows a mask of an emergency application before a transmission to a call centre starts according to an exemplary embodiment of the present invention.
Fig. 7 shows a mask that is used after decoding a voice message from a remote operator according to an exemplary embodiment of the present invention.

### Detailed description

The illustration in the drawings is schematic and may be not to scale. In different drawings, similar or identical elements are provided with the same reference numerals.

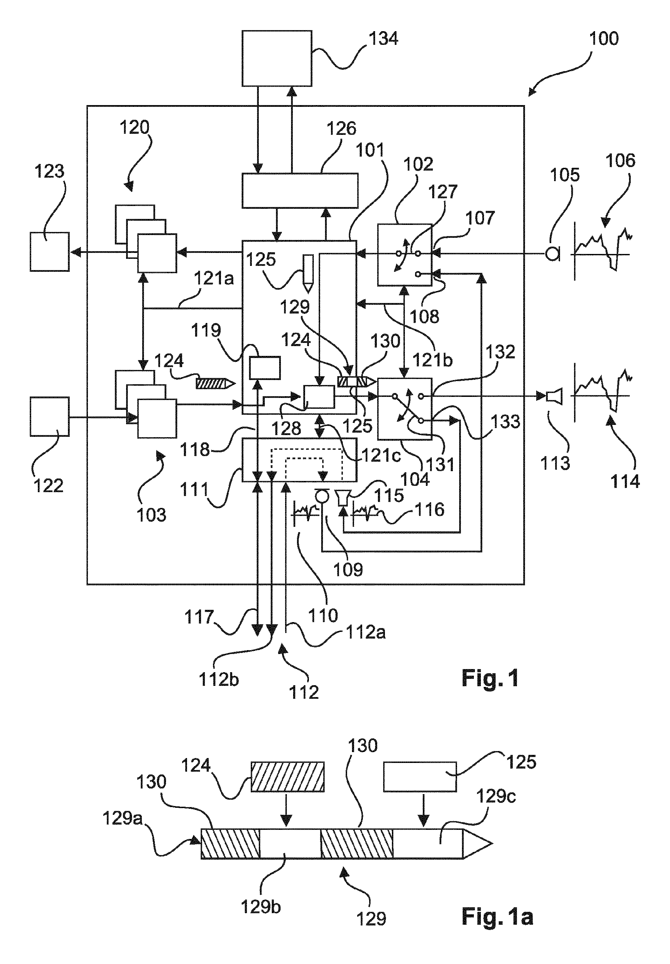

Fig. 1 shows a block diagram of a prosthesis apparatus 100. The prosthesis apparatus 100 has an emergency engine 101 that is connected to the audio input device 102, to one sensor input device or to a plurality of sensor input devices 103 and an audio output device 104. Both the audio input device 102 and the audio output device 104 have a local port 107, 132 and a remote port 108, 133.

The audio input device 102 is connected to a local audio source 105, for example a microphone which is adapted to receive a frequency spectrum 106 or air pressure values 106, for example an analog voice signal. The local audio source 105 is connected to a first terminal 107 of the audio input device, the local port 107. The second terminal 108 of the audio input device, i.e. the remote port 108, is connected to a remote audio source 109 which is adapted to receive an analog voice spectrum 110 or air pressure values.

In comparison with the local audio source 105, the remote audio source 109 is adapted to receive an audio signal from a remote source which may be connected via a communication interface 111. However, in general the local generator and the remote generator are similar. Also the local source and the remote source are similar. In some cases "local" and "remote" is only a naming convention to differentiate the different ports of the audio input device and the ports of the audio output device.

The communication interface 111 may have an audio interface to be connected to remote generator 115 and remote source 109 and a pure voice channel 112 comprising an analog synchronous input channel 112a and an analog synchronous output channel 112b. The audio interface 115, 109 is a bidirectional interface for sending and/or receiving analog voice signals. The voice channel 112 is a synchronous channel or a circuit switched channel 112. For example the voice channel 112 is an analog audio channel, a SVC (Switched Virtual Connection) or a PVC (Permanent Virtual Connection). The voice channel 112 is a dedicated channel linked to the remote audio source 109 or to the remote audio generator 115. The remote audio generator 115, for example a loudspeaker, is adapted to generate an analog voice signal 116 which is adapted to the human ear and to a frequency transfer function of the human ear. The bandwidth that can be transferred via the remote input 109 and/or the remote output 115 or via the local input 105 and/or the local output 113 comprises at least the frequency spectrum of 300 kHz to 1 MHz, in another example the range of 20 Hz to 20 kHz or 20 Hz to 100 kHz. Audio input 105 and audio output 113 can be connected wired or wirelessly, e.g. with a Bluetooth headset.

The dedicated input channel 112 is connected via the communication line or via a communication interface 111 to the remote voice source 109. The analog output channel 112b is connected to a remote sound generator 115 and the remote sound generator 115 is able to provide a frequency sequence 116 or frequency spectrum 116 of a voice signal which can be detected by the human ear. As an alternative solution, depending on the used voice interface or communication interface 111, the signal provided at the remote audio source 109 and the remote audio generator 115 can be packed and unpacked into/from a protocol frame such as PCM (Puls-Code-Modulation), ISDN (Integrated Services Digital Network), SDH (Synchrone Digitale Hierarchie), SONET (Synchronous optical networking) or any other transfer protocol.

In addition to the synchronous channel 112, the communication interface comprises a data channel 117 which can be used for packetized data transport. Compared to the dedicated channel 112 or the synchronous channel 112, the data channel 117 can be packet orientated and asynchronous. In other words, whilst the dedicated channel 112 allows for predicting of the arrival of a signal, the packet orientated channel 117 may only provide best effort service with unpredictable delays. Channel 117 may be D-channel of a GSM or an ISDN connection or used for a SMS. Channel 117 and channel 112 can be managed and administrated independently from another. In an example, a protocol is driven over the data channel 117 such as the IP protocol and/or a Voice over IP protocol. The data communication channel 117 can be directly connected via the internal data connection 118 to a protocol device 119. The protocol device 119 terminates or begins packing and unpacking of the corresponding protocol driven via the data communication lines 117, 118. The protocol device can also establish the data connection. In an example the data connection 118, 117 is established after an incoming call or an incoming SMS is detected in the emergency engine. In other words, an incoming call over channel 112 can trigger a data connection 117, 118.

The synchronous channel 112 substantially transfers a pure frequency spectrum 110, 116, 106, 114 and may do not employ any further protocol than digitizing of the analog signal. No special network layer or routing protocol is implemented for the voice channel 112.

Data transmitted to the protocol unit 119 can be additional data for the emergency scenario or control data for the sensor input device 103 as well as video data received from one of the sensor input devices 103 or any control information for the actuator output devices 120. The protocol device 119 can be controlled via a voice connection. The control information or the data information that is packed in the protocol device 119 or unpacked in the protocol device 119 can be distributed or collected via the control signal lines 121a and 121b. The control signal 121a can provide or gather control information or signals from the sensor input device 103 and to the actuator output device 120. For addressing a specific sensor connected to one of the sensor input devices 103 or an actuator connected to one of the actuator output devices 120 a port addressing schema or an IP (Internet Protocol) addressing is provided. The sensor input device 103 is connected to a single or a plurality of sensors 122, the actuator output device 120 is connected to a single actuator 123 or a plurality of actuators 123. The actuator output device may be a driver for a specific actuator 123 which may be adapted to convert an electric signal into a mechanical force. The sensor input device 103 may be adapted to receive a physical variable from a sensor 122 and convert it into a digital signal, for example by analog/digital (A/D) conversion. A signal provided by a sensor 122 may be converted by the sensor input device 103 into a sensor input packet, for example as indicated by the packet 124.

The analog audio signal 106 or the frequency spectrum 106 collected by the local audio source is converted into a local audio input data packet 125 by audio input device 102. In order to allow a secure recognition of the audio signal 106, preconfigured local audio input data packets are defined in the audio input device which can be allocated by pattern recognition. The analog input signal 106 is divided into portions of signals and can be analyzed to find the specific preconfigured local audio input data packet 125 best matching a certain portion of the frequency spectrum. Elapsed time can be measured to calculate direct distance between local audio out and audio in and to calculate distance through a sound transmitting or to a sound reflecting medium. With at least two audio in channels, the direction of the audio source can be calculated. Detection of frequency shift will provide further information of fast moving audio sources or moving prosthesis apparatus users. For example the direction of a moving object such as a car can be detected and signaled by an output, e.g. text message or vibration signal. The preconfigured local audio input data packets 125 may be selected via configuration by the configuration device 126 and may be stored as profile information in the emergency engine 101 and/or in the configuration device 126. The profile information such as any other configuration data is provided to the audio input device 102 and/or to the audio output device 104 via the configuration line 121b.

The audio input device 102 comprises a selection device 127 which is adapted to selectively receive an input signal via the local input port 107 or local input terminal 107 and the remote input port 108. The selection may be made based on an activity signal recognized on the local input source 105 and/or the remote audio input source 109.

The preconfigured local audio input data packet 125 and the preconfigured sensor input data packet 124 is combined within the sequencing device 128 into an emergency message data packet sequence 129. The emergency message data packet sequence comprises the preconfigured local audio input data packet 125 and/or the preconfigured sensor input data packet 124 and filling information 130. The filling information is used to generate a sentence according to a preconfigured emergency profile and to bring the information provided from the data packets 124, 125 into a context that can be understood by the remote operator when converted into speech.

The profile may select a preconfigured structure for the preconfigured local audio input data packet and the preconfigured sensor input data packet. A signal generated from the emergency message data packet sequence 129 may be understood by a human operator without any further explanation. The frame for the emergency message data packet sequence may be filled up with the preconfigured local audio input data and/or preconfigured sensor input data packet according to a checklist stored in the emergency engine 101 and typical for a special emergency scenario. Such a checklist may comprise 1500 possible questions that can be asked dependent on the present emergency scenario.

It is to be understood that even if the example assumes a preconfigured local audio input data packet 125 and a preconfigured sensor input data packet 124 situations may exist where only a preconfigured local audio input data packet 125 or only a preconfigured sensor input data packet 124 exists.

Fig. 1a shows an emergency message data packet sequence 129 according to an exemplary embodiment of the present invention. In particular Fig. 1a shows an example of composing an emergency message data packet sequence 129 before converting to speech. The frame 129a may be provided by a profile based on a detected emergency scenario. For a complete sentence for an emergency call, information 129b, 129c, e.g. actual values of sensors, may still be missing. The missing information 129b, 129c can be provided by a preconfigured rule and gathered from the sensor 122 connected to the preconfigured sensor input data packet 124 and/or the preconfigured local audio input data packet 125. In an example, the preconfigured frame 129a could be a data packet sequence for the sentence "*My name is* XXX. *I have an accident at location* YYY." The information XXX can be provided via the audio input device 102 and via the preconfigured local audio input data packet 125. The position information YYY can be provided by the sensor signal converted into the preconfigured sensor input data packet 124. The complete emergency message data packet sequence can be provided to the audio output device 104. The audio output device 104 comprises a selecting device or a switch 131 which can select a local audio generator 113 via the local output port 132 or the remote audio generator 115 which can be selected via the remote output port 133. Which port be selected may depend on a direction of the emergency communication.

In Fig. 1, a situation is shown where a local user, not shown in Fig. 1, provides an emergency signal to the local audio source 105. Triggered by the signal or by a special key word which may be derived from the preconfigured sensor input data packet or which is detected in the audio input device 102 in combination with a stored profile composes an emergency message. The information from the corresponding sensor input devices 103 is provided in preconfigured sensor input data packets 124. The emergency engine 101 recognizes that an emergency call out is triggered and therefore selects via the configuration line 121b the remote output port 133 for providing a remote audio output signal 116.

In an alternative example the sensor input device 103 comprises a button sensor. This button sensor is implemented as emergency button. If the emergency button is pressed a certain emergency call can be set up.

A further situation is realized for the detection of threatening noise sources or dangerous noise sources which provide one or more audio signals to the local audio source 105. In an example a single audio signal is provided by a mono microphone and two audio signals are provided by a stereo microphone Triggered by a recognized change of the audio signals, e.g. by increasing the sound level, by frequencies shift or by detecting a special sound, e.g. sound from a motorized vehicle, the configured profile or rule may derive from the generated preconfigured sensor input data packet and the preconfigured local audio input data packet detected in the audio input device 102 the emergency engine 101 recognizes that an warning message or a local warning notification is to be generated. The emergency engine therefore selects via the configuration line 121a the actor output port 120 for providing a actor output signal 123, e.g. a vibration warning signal and also sends a warning message to the display 134 at the configuration device 126.

In an alternative example the sensor input device 103 comprises a distance sensor, e.g. a radar sensor, laser sensor or an ultrasonic sensor. Such a distance sensor may be implemented as collision warning sensor. If the distance sensor is activated a certain emergency call can be set up or a warning notification can be sent to a local audio generator 113 or an emergency message 129 can be sent to the remote audio generator 115.

The emergency engine 101 can be configured via the configuration device 126, for example a touch screen interface which is driven by an input/output device 134. The input/output device, in particular the configuration device 126, allows for configuring a data protection filter which may be used for data protection and determines the information that is provided to an output device 104. The filter, configuration or logging information is stored in an internal memory or register of the emergency engine 101 (not shown in Fig. 1) or on the configuration device 126.

A remote operator (not shown in Fig. 1) on the other side of communication interface 111 connected to the audio channel 112 and/or to the data channel 117 can provide commands to the audio input device 102 via the remote audio input source 109 and via the remote port 108 of the audio input device 102. Similar to handling of the local audio input signal 106 and generating of the preconfigured local audio input data packet 125, a preconfigured remote audio input data packet can be generated from the remote input signal 110, e.g. a command given by a remote operator. By providing commands via natural voice or natural speech it is possible, that a remote operator, who is not familiar with operating the prosthesis apparatus 100, can configure the prosthesis apparatus and request information from the emergency engine 101. For example, a remote operator or supporter can request repeating of information provided as the emergency message data packet sequence 129 without involving the user who has have set up the emergency call and may be in the meantime not be able to repeat the information any more. In other words, a remote operator can communicate via natural voice with the emergency engine 101 and without additional involvement of the user who may be injured and not be able to communicate any more. Also a remote operator can request additional information provided by the different sensors 123 connected to the sensor input device 120 by natural voice.

Furthermore the emergency engine 101 can automatically configure the audio input device 102 based on information presently available, for example by the sensor input devices 103. In an example, the operator (not shown in Fig. 1) of the prosthesis apparatus is a German nationality, actually having an accident or another request such as an order, in a foreign country. For example, the sensor input device 103 or one of the plurality of the sensor input devices 103 provides a preconfigured sensor input data packet 124 indicating that the actual position of the prosthesis apparatus 100 is Italy. The emergency engine can automatically configure the audio input device and the audio output device 104 via the configuration line 121b to make a language translation between German and Italy. Thus, a German user can communicate with an Italian remote operator even without any knowledge of the Italian language.

For converting the language, there may be within the audio input device 102 a selection of a sequence table which allocates preconfigured local audio input data packets 125 to the corresponding preconfigured local audio input data packets 125 in the corresponding language, for example Italian. The same is true for the opposite direction from the remote operator via the audio input device 102 and leading to the local audio generator 113. Since both connections pass the same audio input device 102 and audio output device 104, the same functions can be used for translating the signal of the local user to the remote operator and vice versa.

In one example, the emergency engine 101 and/or the configuration device 126 is configured as a data protection filter. The emergency engine 101 enables data protection by managing the communication interface 111, the audio input device 102, the audio output device 104, the sensor input device 103, the actuator output device 120 and the configuration device 126 including a touch display 134 or a touch screen 134 or any other input/output device 134. By controlling the communication interface 111, each interaction between the prosthesis apparatus 100 and in particular between the emergency engine 101 and the environment can be logged and/or filtered. In other words, the traffic that is exchanged between a remote operator and a local user can be logged and/or filtered and therefore be controlled. All interactions between a user and a remote operator are substantially sent via the communication interface 111 or the communication line 111. The configuration data stored in an emergency engine 101 defines which data are allowed to be sent out.

If the filter function is used the emergency engine 101 and/or the configuration device 126 can be configured as a data protection filter that controls the information that is passed via communication interface 111. The emergency engine 101 provides data, packet data 124, 125 or particular text 124, 125. This text can be provided as audio pattern sequence 129 and the audio pattern sequence 129 or the emergency message data packet sequence 129 can be converted to audio information for an output generator 115 to be sent out as a pure audio signal. The data or text that is not to be provided is filtered before the audio pattern sequence 129 is generated.

In another exemplary embodiment, the emergency engine 101 and/or the configuration device 126 can be configured as a filter for a sensor input data packet or as a filter for sensor data. Predefined or selected sensor data 124 can be requested by an audio sequence pattern input from remote operator via the audio input device 102, in particular via the remote input port 108 of the audio input device 102. The emergency engine 101 can be configured in such a way, that substantially only selected or predefined sensor data 124 will be sent out as audio data sequence over the audio output channel 133, 115, 112b. In other words, the measurement values provided from sensor 122 via a sensor input device 103 can be converted into a text message which can be sent out via the remote audio output port 133 as a frequency spectrum, so that a human ear can understand the message.

The configuration of the audio input device 102 and the audio output device 104 can be made by at least one of a user, a sensor 122 and/or by an actuator 123. The audio output device 104 converts a text message 129 to an audio output signal comprising a frequency spectrum that is passed by the transfer function of a human ear. In other words, the audio output device 104 performs text to speech conversion. The audio input device 102 converts analog audio input signals 106, 110 into text 125 and performs speech to text conversion. The conversion from text 129 to an audio signal 114, 116 and/or the conversion from an audio signal 106, 116 to a text message 125 is made in dependence with the configuration.

The configuration can be preconfigured in the emergency engine 101 or can be setup by a remote user via the communication line 117, 112 and/or by a local user using the configuration interface 126. By using a configuration, the emergency engine can configure the audio input device 102, the actuation device 120 and the sensor input device 103 and can define an allocation from an audio pattern to a data packet by defining a sequence table. In other words, audio patterns in a frequency spectrum 106, 114, 110, 116 can be recognized and allocated via a sequence table to data packets 125, 124. The allocation of the audio patterns contained in the audio frequency spectrum 106, 114, 110, 116 to preconfigured local audio input data packets 125 or to remote audio input data packets may be influenced by a user, by the audio input device 102, by the sensor data provided by the sensor input device and by the actuator configuration.

The configuration is made via configuration lines 121a, 121b. Via the configuration lines 121a, 121b also information from a sensor 122 and/or from an actuator 123 can be provided, e.g. information about the sensor signal such as a geo-position of the prosthesis apparatus 100, a list of the single or plurality of connected sensors 122, a list of connected actuators 123, a GSM position information or a GNSS position information.

In another example, the emergency engine 101 can be used to control the actuation device 123 via the actuation output device 120. The control can be made by natural voice which is provided either via the local audio source 105 or the remote audio source 109.

The emergency engine 101 can exchange configuration data with communication line 111 via the configuration line 122c. In an example the emergency engine 101 can initiate an outgoing call to a preconfigured telephone number dependent from the sensor data 124. A user interaction may be not necessary if the emergency engine is configured to automatically set up communication connection 112, 117 to a remote operator. Thus, the emergency engine 101 can automatically detect an emergency scenario and take the required action without involvement of a user who may be the victim of an accident and not be able to operate the prosthesis apparatus any more.

The emergency engine 101 can also establish a data connection 117 when an incoming call from the communication line 112 is recognized or in the case where preconfigured sensor input data packets 124 indicate an alert. If one of the connected sensors 122 is a video source, such as a camera, an image can be provided as preconfigured sensor input data packet 124, analyzed by image recognition and be transmitted as image description via the communication channel 112. The image or video itself can be transmitted in particular via the data communication channel 117 of the communication interface 111. The transmission of an image may be initiated by recognizing an incoming phone call, a particular pattern of sensor data 124 and/or by an audio sequence pattern 125.

The audio input device 102 can be configured to receive a multi-tone multi-frequency signaling DTMF (Dual Tone Multifrequency). The emergency engine delivers a reference to the decoded DTMF value as a signal provided on the configuration line 121b.

In order to determine the preconfigured audio input data packets the audio input device 102 can be configured to receive a continuous audio frequency spectrum and to compare the continuous audio frequency spectrum with a pattern sequence which may be stored within the audio input device 102.

For optical indication of audio feedback, the audio output device 104 can be configured to select an audio output sequence pattern and an amplitude. An audio sequence input table of the audio input device 102 can be selected by the audio input device 102. The audio input device 102 marks preconfigured local audio input data packets 125 if an audio sequence from the audio input device 102 has been found in a selected audio sequence table. The marking or signaling is made by an LED or a display 134 which may be part of the configuration device 126 or one of the actuators 123. If the predefined audio sequence is found in an audio spectrum 106, 110, an audio signal can be sent to the local audio generator 113 to alert the user.

The emergency engine 101 can record and transmit the exchanged information, as well as sensor data, images and videos 103 via data connection 117.

For getting information about the environment the emergency engine 101 can send a signal to the local audio generator 113 and log or measure the elapsed time for sending the emergency message packet sequence 129 to the audio output device 104 to the time one or more echo signals are detected in one of the terminals 107 for the audio input devices 102. The emergency engine can log the elapsed time for different audio frequencies.

The emergency engine can also log the elapsed time from the moment a signal is sent out via the audio output channel 113, 112b to the moment a signal is received via audio input channel 105, 112a. The emergency engine can log the elapsed time for different audio frequencies. In other words, the signal quality and the signal delay is measured between output channel and input channel including all involved components. For example a transfer function for a predetermined signal is measured.

The channel quality of data channel 117 and/or audio channel 113, 105, 112 is measured by measuring reaction time for example with a ping command with different frequencies in order to get statistical data about the used channel.

The sensors 122 connected via the sensor input device 103 to the emergency engine 101 can comprise position beacons which use artificial magnetic field beacons with a predefined number of permanent magnets. In another example, an artificial magnetic field beacon is generated with electric stimulated magnetic field. In yet another example, RFID (radiofrequency identification) beacons or NFC (Near Field Communication) beacons are used. Each beacon has an Identification which is mapped to a specific geolocation.
In a specific area an identification number represents a specific geolocation with latitude, longitude and altitude value.

The emergency engine may be adapted to calculate from the preconfigured sensor input data packet 124 provided by the sensors 122 an exact position. In order to calculate the position, GNSS data, GNSS correction data, beacon reference points and IMU movement may be used. An IMU movement can be detected by the sensor input device 103 by combining at least one or a plurality of combinations of accelerometers, gyroscopes, magnetometers, barometer and optionally a camera.

If one of the sensors 122 is a camera sensor an image of the point of interest can be provided to the sensor input device 103. The sensor input device 103 compares the image information from the camera sensor with a locally stored image pattern that is preconfigured inside the sensor input device 103. The image information is converted into a preconfigured sensor input packet 124 such that the selected sensor input packet 124 is the best match for the provided sensor input signal and the stored preconfigured data packets 124. The emergency engine 101 provides the sensor input data packet 124 to the audio output device 104 which convert the data information into text information that represents a sentence and can be communicated as text to speech via the audio output device 104.

The emergency engine 101 may further be adapted to activate actuators 123 which are connected to the emergency engine 101 via actuator output device 120. The actuators can be activated or controlled either locally by a human machine interface 134 or voice, or remotely by voice via the synchronous communication channel 112 and the audio input device 102. Configuration data stored in the emergency engine can control the behavior of the actuation device 120 and thus the behavior of the actuators 123 via the configuration line 121a. In an example, the emergency engine 101 can control a motor gear actuator by an audio frequency input which is converted from a frequency spectrum 106, 110 in the audio input device 102 to preconfigured local audio input data packet 125 or preconfigured remote input data packet.

The preconfigured local audio input data packet 125 or remote audio input data packet could be data packets for controlling the direction of a motor gear actor, for example turning left, right, up, down the acceleration, stop, go home, repeat, ok, continue or 1, 2, 3, 4, 5, 6, 7, 8, 9, *, # and configuration.

The configuration device 126 can be connected to an input/output device 134 or to a human machine interface 134, e.g. a display, a LED, which displays an audio sequence that is currently sent via the audio output device 104 or received via the audio input device 102. A display can show a text, a graphic or an icon. The display may also be used to provide information for a checklist in order to collect all information required to assess an emergency situation.

The audio input device 102 comprises an audio to text converter which can be configured via configuration line 121b. It is possible to configure the sound detection patterns, e.g.noise pattern of vehicles or noise pattern of motors, or languages, e.g. German, Italian, English, and the context sensitive set of words which can be detected.

The audio output device 104 can comprise a text to audio converter which can be configured via the configuration line 121b. The sensor input device 103 can convert a signal provided by a single sensor 122 or a plurality of sensors 122 into a data packet 124, for example by using analog to digital conversion in order to convert a physical sensor signal to data information. The conversion can be influenced via a configuration provided by configuration line 121a. The actuator output device 120 comprises a data to actuator converter which can convert information of a data packet provided from the emergency engine 101 to the actuator output device 120 (the data packet not shown in Fig. 1) into a corresponding physical actor signal. The conversion from the data into an actuator signal depends on configuration provided by a configuration line 121 a.

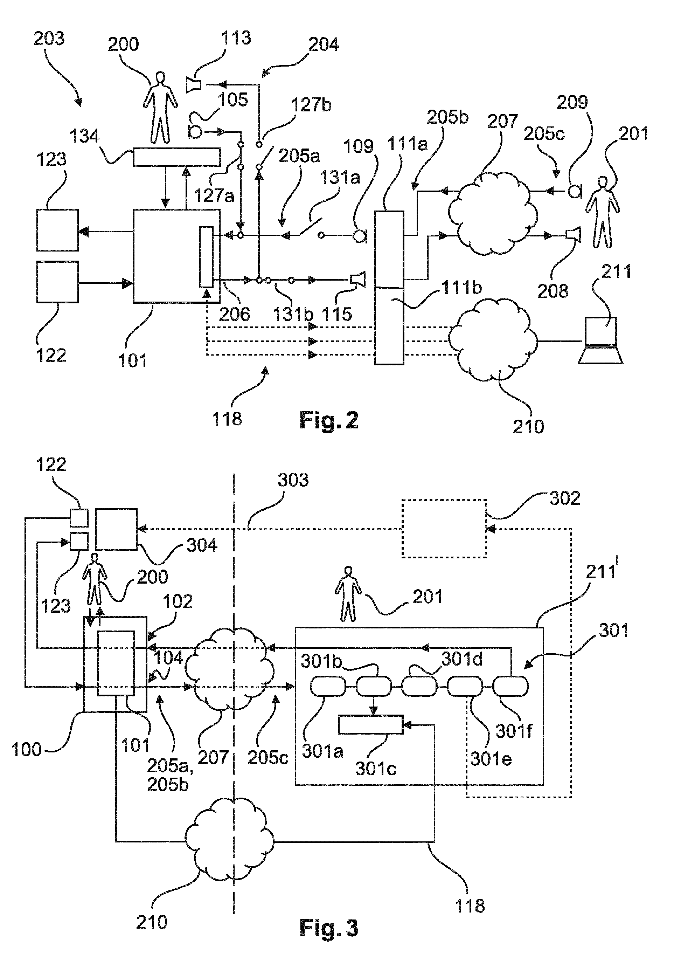

Fig. 2 shows a block diagram for an end-to-end scenario between a user 200 and a remote operator 201 or supporter 201. The block diagram 203 shows the separation between synchronous audio or voice communication and asynchronous data communication. The analog voice follows the local dedicated voice path 204 to the emergency engine 101 and the remote dedicated voice path 205a, 205b, 205c. The voice generated by the mouth of a user 200 is captured by the audio source 105. The voice signal passes the switch 127a of the audio input device 102 and is converted from an analog signal into a data packet inside the emergency engine 101. Inside the emergency engine, an emergency message data packet sequence is generated and converted back to an analog voice signal which is provided at the output port 206. The generated audio message passes switch 131b of the audio output device 104 and reaches the remote audio generator 115. After leaving the remote audio generator 115, the voice signal is converted inside the synchronous part of communication line 111a into a format that can be transported as dedicated voice over the switched communication network 207. After passing the switched network 207, the voice signal arrive at the remote audio generator 208 at the call center of the remote operator 201 or supporter 201. The audio source 208 is for example a loudspeaker of a telephone which generates the frequency spectrum of an analog voice signal. This analog signal can be coupled to the ear of the remote operator 201.

The remote operator 201 can respond to a message received via loudspeaker 208 with an analog voice signal or frequency spectrum generated by his mouth which is captured with the remote audio source 209 at the call center of remote operator 201 or supporter 201. The analog audio signal is converted into a format that can be transported over the switched network 207 or synchronous network 207 in a dedicated audio channel. After passing the dedicated audio channels 205b, 205c the signal arrives at a switched voice part 111a of the communication line 111 of the emergency engine 101. The remote audio source 109 receives the substantially analog voice signal and forwards the signal via switch 131a to the emergency engine 101. Inside the emergency engine 101, the analog audio signal is converted by speech to text conversion into a data packet which is processed inside the emergency engine 101. Whilst analyzing the received message, a command portion inside the signal may be detected which is used to control the emergency engine 101, e.g. the actuation device 123. Also a speech part can be extracted from the received voice signal which is intended to be used as a voice message for the user 200. This speech part is handled as a preconfigured remote audio input data packet. A preconfigured notification message data packet sequence is composed and is converted back to an analog audio signal which can be transported via the audio output 206 and switch 127b and the local audio generator 113 to the ear of the user 200. During the time local notification is provided to the user, switch 127b is closed whilst switch 131b is open controlled by the emergency engine.

In other words, the emergency engine 101 provides for management if a dedicated communication channel between user 200 and supporter 201. The substantially analog audio signal passes the dedicated channel via line 204, emergency engine 101 and the dedicated communication channel 205a, 205b, 205c. On its way, the audio signal is converted into data packets to be processed inside the emergency engine 101. Frame information can be added to the transported signal in order to transport the signal via digital synchronous communication network 207. The audio communication between user 200 and remote operator 201 is a synchronous, real time communication via a dedicated communication channel 112.

The dedicated communication channel 112 is separated from a data communication path 118. The data communication 118 can comprise IP traffic, internet traffic or any packet data traffic such as configuration data. The data communication is transported via the data part 111b of communication line 111 and via the data or packet network 210 to a workstation 211 at the call center of the supporter. In other words, the communication between the user and the supporter 201 can be made via separate audio communication and data communication paths. The audio communication path allows a synchronous communication via the audio input device 102 and the audio output device 104 (not shown in Fig. 2). The data path allows asynchronous communication, for example IP, data or SMS services. The data communication path may be used for data provided by the sensor or the plurality of sensors 122, for control information for actuators 123 in addition to the voice communication path. Since data and voice communication is possible there exist two ways of communicating with parts of the prosthesis apparatus 100, for example with the actuator device 123. A first option, if configured in the emergency engine 101, is controlling via the voice of the supporter 201. The other option is controlling via workstation 211 and using a data communication path.

The audio stream between supporter 201 and user 200 is monitored by the emergency engine 101 by converting it into data packets. The data packets make it possible to use a language translation between the user 200 and the supporter 201. Since the user 200 is using the prosthesis apparatus 100 comprising the emergency engine 101, the supporter does not realize that a user is talking to the supporter who is not able to speak the language. Switches 127a, 127b, 131a, 131b can be controlled by the emergency engine 101 in order to control the direction of the speech communication.

Fig. 3 shows a more detailed block diagram of a communication scenario between a user 200 and a supporter 201. The user 200 uses prosthesis apparatus 100 for communicating with supporter 201. The user 200 triggers an emergency call at the workstation 211' in the call center of supporter 201. Instead of an emergency call the prosthesis may be used for any other call such as an ordering process.

The workstation 211' or the remote station 211' integrates audio and data communication. The workstation 211' implements a workflow 301 for handling the call. The incoming call is taken by the workstation 211' in a first step 301a. In step 301b, the emergency process is started. Additional user data are received via data communication path 118 in step 301c from the emergency engine 101 of the user.

User data can be plain text, structured text, structured multilingual text, image or video data which is provided via data channel. The user data may be protected by a username and password.

User data can also be received via the audio communication 205a, 205b, 205c and are inserted into the workstation 211' manually by the supporter 211. The step 301c of gathering user data comprises gathering as much information as possible. This gathering process involves getting user data provided by the user 200 verbally and by the emergency engine according to a user profile or a filter implemented in the emergency engine 101. For data protection reasons the servername, username and password are transmitted via audio communication if the prosthesis apparatus has been configured to provide this data in case of emergency. The operator can login with this information to the protected user account to access further user data for a limited time period. In other words, when an accident happens the access information to the user data is sent via the audio channel 205a, 205b, 205c to the supporter, whilst the user data itself may be transmitted via audio channel 205a, 205b, 205c and/or data channel 118. The access information to the user data and the user data are distributed via different communication paths.

In step 301d, the workstation 211' supports the supporter in finding the required action. In step 301e, resources are allocated for the emergency action at the user. Automatically or triggered by supporter 201, workstation 211' requests in step 301e support from support organization such as police, ambulance or rescue teams 302. Proprietary interfaces are used for a communication between workstation 211' and the call out of the required resources 302.

In step 301f a confirmation is provided to the emergency engine 101 via the voice channel 205c, 205 a, 205 b in form of a natural voice message. The confirmation message is provided to the audio input device 102 of the emergency engine 101.

After requesting support 302 as indicated by arrow 303, the support teams are sent to the point of interest 304 or location of accident 304 close to the user. In order to get user data in step 301c, the supporter 201 can control actuators 123 and receive information from sensors 122 in order to get a picture of the situation close to the user 200 at the point of interest 304. For example, a camera 122 can be used to get the information of the location and to plan an emergency call out for the support teams. Sensors 122 and actuators 123 can be controlled by the supporter 201 via either audio communication 205a, 205b, 205c or data communication 118.

The circuit switched network 207 for audio communication can comprise virtual dedicated paths. The circuit switched communication network 207 can comprise synchronous communication infrastructure such as SDH, GSM, PSTN. The supporter 201 can use standardized questions, standardized questionnaires or standardized checklists with predefined choice of answers for emergency calls in order to get sufficient and consistent user data 301c.

The checklists are updated during system setup and if online data connection 117 is available the prosthesis apparatus provides all necessary checklists and possible checklist answers that can be selected by the user or the connected sensors. The checklist can be used as a frame 129 or filling packets for the emergency message packet sequence.

The prosthesis apparatus 100 and in particular emergency engine 101 can support emergency calls with reliable geo-referenced and structured multi-lingual voice and data messages. The prosthesis apparatus 100 can allow disabled people like deaf people to communicate with an emergency support center 201 even if they are usually not able to communicate via audio line or temporarily not able to use an audio line. The user 200 can be everybody like pedestrians, bikers, mobile workers. The prosthesis apparatus 100 can include handicapped users, people with hearing impairment or voiceless people participating a normal emergency call out. With the prosthesis apparatus 100, everybody can be included in an emergency call such as provided by the common European emergency number 112. The point of interest 304 may be continuously monitored during the user may have an accident. For example, user 200 can be a biker who is making a tour with a motor bicycle. The prosthesis apparatus 100 can continuously watch the inclination of the motorbike with integrated GPS and INS sensors 122. In case the inclination provides a pattern for an emergency like the inclination is not a normal inclination for a motor bike, an emergency call can automatically be generated by the prosthesis apparatus 100. The prosthesis apparatus 100 can detect critical situations and automatically or manually initiate a call out, for example to the call center by dialing the emergency number 112. The prosthesis apparatus can have a special voice connection and support the user in a critical situation even when SMS or Internet is not available. The most commonly available communication technology may be a synchronous dedicated communication infrastructure 112 used by normal telephone calls. The prosthesis apparatus 100 can be an embedded system or an application on a smartphone and therefore is easy to be used. Geo-referencing by using corresponding position sensors 122 allows quickly locating a person that needs to be rescued. Depending on the configuration of emergency engine 101, the information provided by the sensors 122 can be continuously sent to the workstation 211' of a call out center. For example, during a dangerous job that has to be made, a user 200 can register the prosthesis apparatus with the workstation and be permanently monitored. Such continuous monitoring may be necessary for lone worker. The frequency and amount of data provided to the workstation 211' can be configured by user 200.

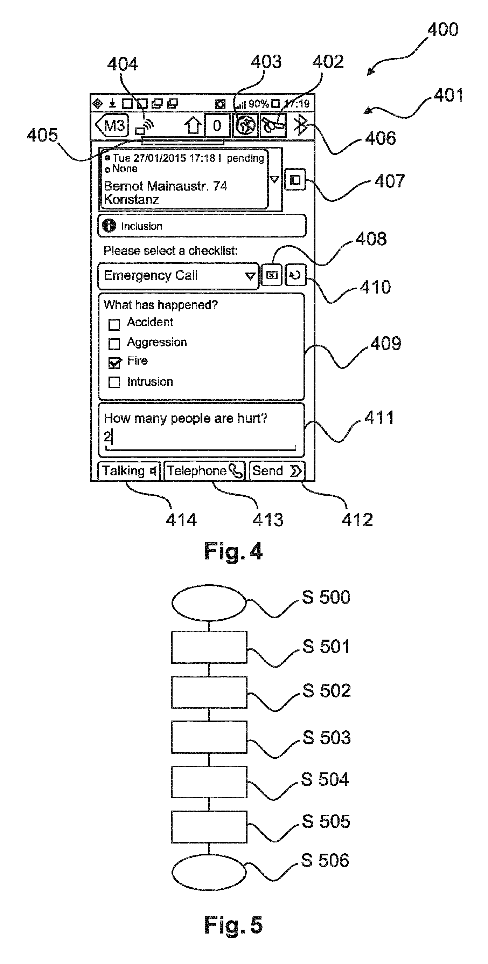

Fig. 4 shows a user interface 134, human-machine-interface 134 or input/output device 134 of a configuration device 126 of the prosthesis apparatus that is used for operating the prosthesis apparatus and for setting up an emergency call according to an exemplary embodiment of the present invention. The user interface 134 has a double function for configuring the prosthesis apparatus and for initiating an emergency call like a sensor. The user interface 134 is implemented as a mask 400 displayed on a touch screen 134 of a smartphone. The mask 400 shows a status bar 401 indicating available sensors with icon 402 and available data connections with icon 403. Icon 402 shows the GNSS signal which can be in an example a GPS (Global Positioning System) signal, a GALILEO signal, a GLONASS signal, an EGNOS (European Geostationary Navigation Overlay Service) signal and/or a WAAS (Wide Area Augmentation System) signal. Icon 403 shows a data connection being established. Each of the icons has a technical representation in the prosthesis apparatus. The signal level of an audio source 105 such as a microphone 105 can be displayed with another icon 404. The text or the preconfigured local or remote input data packet 125 that is recognized in an audio communication is displayed in a text field 405. Text field 405 allows a user to control the decoded text that is sent to an emergency support center. The text displayed in text field 405 is provided by the audio input device 102 and/or the audio output device 104. The type of information that is displayed depends on the direction of the communication. Icon 406 shows sensors and actuators which are connected by USB or which are wirelessly connected to the prosthesis apparatus. In particular the sensor/actuator connection status is shown with icon 406. For example, a sensor or actuator connected via Bluetooth BLE 4.0 (Bluetooth Low Energy) is shown in icon 406. The information field 407 provides available information about the point of interest 304. The point of interest is the location where the accident happened and is the location which may be derived from position information provided by a GNSS sensor, manually or by a beacon ID.

The language field 408 allows a user to select the language for the display and for an audio communication. Button 408, allows selecting the language that is used for the operator. In one example, the language can be chosen by position information provided by the position sensors.

The communication field 409 is used to provide information that is converted into audio out. The information can be delivered from a checklist 409 which is specifically automatically selected for a special scenario by analyzing sensor signals. Alternatively the checklist can also be controlled by the supporter. A special scenario like fire can be selected in the checklist and after pressing the sync, reload or configuration button 410, the information that is provided in the checklist 409 will be converted into audio data and sent to a supporter in a call center as a voice message.

The input field 411 provides a textural communication option with an operator to provide information that cannot be handled with a checklist, for example the number of injured people. The send button 412 can be used to set up a data connection. The telephone button 413 can be used to set up an audio or voice connection. The talk button 414 can be activated by the user, the sensor or the supporter.

The Read / Talking button 414 toggles from Read to Talking if the user, the sensors or the audio input device activates the text to speech output. With this button switching between data communication and audio communication is possible. If Talking is activated the words which are sent to the text 2 speech (text to speech) converter in audio output device 104 are marked, e.g. yellow. The microphone symbol 404 shows with the audio level that the text 2 speech output is active and the prosthesis apparatus is talking to a remote operator via audio communication.

The telephone button 413 initiates and activates the phone connection depending on sensor data or user activation or incoming call. After pressing the telephone button the prosthesis apparatus can be used as a telephone where the audio signal passes the audio input device 102 and the audio output device 104.

The Send button 412 sends the checklist answers including images, videos and a signature over the data communication line 117 and as converted text to speech and sound over audio out.

Fig. 5 shows a flow-chart of a method for generating and receiving a call according to an exemplary embodiment of the present invention. The method starts in an idle state S500. In step S501, sensor data is received from a sensor as a sensor input signal. The sensor input signal is converted into a corresponding preconfigured sensor input data packet.

In step S502, a preconfigured emergency scenario is determined from the received preconfigured sensor input data packet in the emergency engine 101. Based on the determined emergency scenario, in step S503, an emergency message data packet sequence comprising a selection of preconfigured sensor input data packets is composed. In an example the emergency message data packet sequence can also comprise preconfigured local or remote audio input data packets. The composed emergency message data packet sequence also comprises preconfigured filling data packets associated with the emergency scenario. The composed emergency message data packet sequence relates to the detected preconfigured emergency scenario and is in accordance with a preconfigured user profile. In particular the composed emergency message data packet sequence takes into consideration which user data a user wants to provide. In step S504, the emergency message data packet sequence is converted into a remote audio signal. In step S505 the remote audio signal is provided to a remote audio generator. In step S506, the method is terminated.

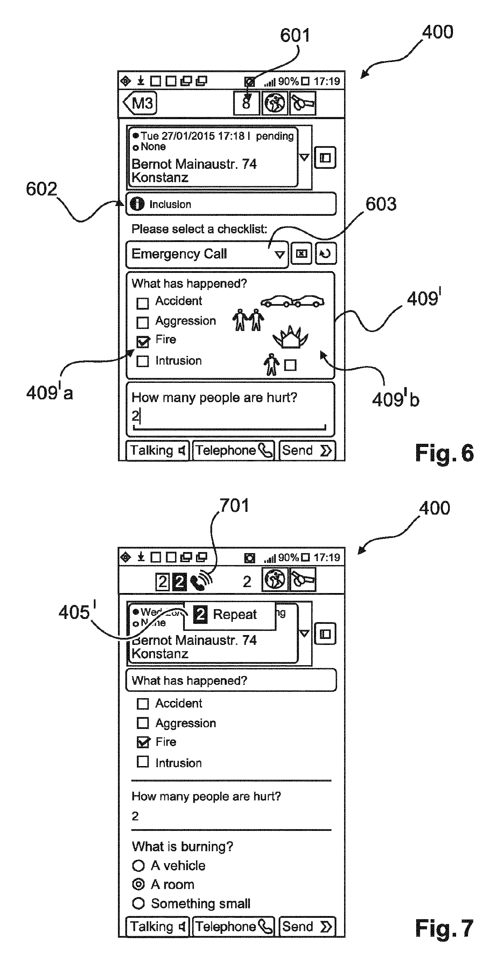

Fig. 6 shows the mask 400 of an emergency application before a transmission to a call center starts. The messages indicator 601 shows the number of dialog transactions to be transmitted. In the case of Fig. 6, eight dialog transactions are queued to be transmitted. Each transaction can correspond to an input mask 409, 409' providing a checklist for questions depending on certain emergency situations. In Fig. 6, the checklist 409' shows the information to be asked from a user in text form 409'a and corresponding symbols as icons 409'b. Using the symbols makes it easy for a user to operate the prosthesis apparatus, who may not be able to read or understand the language as provided to identify the emergency situation. Field 602 is an information field and provides further information, e.g. Social Security Number, project number, responsible cost centre, weather data.

The information field 602 or infofield 602 shows additional text information provided with the checklist from the server.

The call centre can provide professional support to the prosthesis apparatus user with additional addresses, actual position of staff members, time schedule, identifiers and further checklists with text, images and videos via data communication channel 117. The user can visualize the provided addresses and the actual position of staff members with distance, direction and scheduled time on the user display 134 or on a connected head up display. Automatic audio out 104 of distance, direction and scheduled time to specified members can be configured.

Providing the own home and actual position and time schedule via audio out 104 and voice channel 112b or via packet device 119 and data channel 117 to the call centre or other members can be configured by the individual user of the prosthesis apparatus.

Field 603 shows the actually selected checklist. The checklist can be selected by the user for example by the user input/output device 134 or by configuration device 126. Alternatively the checklist can be selected by the remote operator who can control the information that is displayed by a voice control. The checklist 409' shows the text that is actually sent out to the audio output device 104 or audio out 104. In other words, the icons that are selected in the checklist 409' are converted into data packets 125 for an audio transmission and added to the emergency message data packet sequence 129. In this context, the checklist 409, 409' can be interpreted as another sensor input device or another input/output device 134 which can be controlled locally or remotely.

Fig. 7 shows a mask 400 after decoding a voice message from a remote operator. The audio input device/audio output device status indication icon 701 shows the signal received from the audio input device 102 and/or the audio output device 104. The icon 701 also shows that an audio connection is established between the prosthesis apparatus and the remote operator. The text field 405' shows the pattern, in particular the local audio input data packet 125 that has been received and decoded by the audio input device 102. In the case shown in Fig. 7, the text field 405' in Fig. 7 shows that message number two has to be repeated. The repetition of the packet has been requested by a remote operator via the audio input device 102 by way of a natural language dialog.

The talking function 414, telephone function 413, sending function 412 can either automatically be initiated by an incoming call, incoming SMS, sensor, timer, or a message via the audio input device. The fields may also be manually activated. Activating the fields may activate the audio output device, a voice connection, a SMS transmission, a data transmission with data exchange, a VoiP connection or an audiovisual connection over IP.

Even if the prosthesis apparatus is described as a portable apparatus the prosthesis apparatus may be installed in a building or stations as points for emergency calls.

It should be noted that the term "comprising" does not exclude other elements or steps and the "a" or "an" does not exclude a plurality. Also elements described in association with different embodiments may be combined. It should also be noted that reference signs in the claims shall not be construed as limiting the scope of the claims.

## Claims

1. Prosthesis apparatus (100), comprising:
a sensor input device (103);
an audio output device (104);
an emergency engine (101);
wherein the emergency engine (101) is connected to the audio output device and to the sensor input device (103);
wherein the sensor input device (103) is adapted to receive a sensor input signal from a sensor (122) and to convert the sensor input signal into a corresponding preconfigured sensor input data packet (124);
wherein the emergency engine (101) is adapted to determine a preconfigured emergency scenario from the received preconfigured sensor input data packet (124); and
to compose an emergency message data packet sequence (129) comprising a selection of the preconfigured sensor input data packet (124) and a preconfigured filling data packet (130) associated with the emergency scenario in order to compose an emergency message in accordance with the detected preconfigured emergency scenario and in accordance with a preconfigured user profile;
wherein the audio output device (104) is adapted to convert the emergency message packet sequence (129) into a remote audio output signal (116) and to provide the remote audio output signal (116) to a remote audio generator (115).

2. Prosthesis apparatus (100) of claim 1, further comprising:
an audio input device (102);
wherein the emergency engine (101) is connected to the audio input device (102);
wherein the audio input device (102) is adapted to receive a local audio input signal (106) from a local audio source (105) and to convert the received local audio input signal (106) into a corresponding preconfigured local audio input data packet (125);
wherein the emergency engine (101) is further adapted to determine the preconfigured emergency scenario from the received preconfigured local audio input data packet (125) and from the received preconfigured sensor input data packet (124); and
to compose an emergency message data packet sequence (129) comprising a selection of the preconfigured local audio input data packet (125), the preconfigured sensor input data packet (124) and a preconfigured filling data packet (130) associated with the emergency scenario in order to compose an emergency message in accordance with the detected preconfigured emergency scenario and in accordance with the preconfigured user profile.

3. Prosthesis apparatus (100) of claim 2, wherein the audio input device (102) is further adapted to selectively receive a remote audio input signal (110) from a remote audio source (109) and to convert the received remote audio input signal (110) into a corresponding preconfigured remote audio input data packet (125);
wherein the emergency engine (101) is further adapted to use at least a first portion of the preconfigured remote audio input data packet (125) as control information for controlling the emergency engine.

4. Prosthesis apparatus (100) of one of claims 1 to 3, further comprising:
an actuator output device (120);
wherein the emergency engine (101) is connected to the actuator output device (120); and
wherein the emergency engine (101) is adapted to determine from the preconfigured local audio input data packet (125) and/or from the preconfigured remote audio input data packet (125) a control data packet for the actuator output device (120) and wherein the actuator output device (120) is adapted to convert the control data packet into a control signal and to provide the control signal to the corresponding actuator (123).

5. Prosthesis apparatus (100) of one claim 3 or 4, wherein the emergency engine (101) is further adapted to compose a notification message data packet sequence comprising at least a second portion of the preconfigured remote audio input data packet (125); and
to provide the notification message data packet sequence to the audio output device (104);
wherein the audio output device (104) is further adapted to convert the notification message data packet sequence into a local audio output signal (114) and to selectively provide the local audio output signal (114) to a local audio generator (113).

6. Prosthesis apparatus (100) of one of claims 1 to 5, further comprising:
a configuration device (126);
wherein the configuration device (126) is adapted to configure at least one of the preconfigured user profile, the preconfigured emergency scenario and/or logging information;
wherein the configuration device (126) is connected to a communication interface (111) and/or to a communication line (111) to a remote location and/or for receiving the remote data from a remote location.

7. Prosthesis apparatus (100) of one of claims 1 to 6, further comprising;
a filter;
wherein the filter can be used for determining the preconfigured emergency scenario; the preconfigured user profile and/or determining the logging information.

8. Prosthesis apparatus (100) of one of claims 1 to 7, wherein the audio input device (102) and/or the audio output device (104) comprises/comprise a communication interface (111) and/or a communication line (111).

9. Prosthesis apparatus (100) of claim 8, wherein the communication interface (111) and/or the communication line (111) comprise at least one dedicated voice channel (112) for providing the audio output signal (116) of the remote audio generator (115) to a remote location and/or for receiving the remote audio input signal (110) with the remote audio source (109) from a remote location.

10. Prosthesis apparatus of one of claims 1 to 9, further comprising at least one sensor connected to the sensor input device and for providing the sensor input signal, wherein the sensor is selected from the group of sensors consisting of:
a touch display:
a touch display showing emergency scenario icons;
a position sensor, e.g. a satellite receiver, accelerometers, gyroscopes, a magnetic field sensor, a barometer;
a climate sensor;
a camera;
a piezo-electric force transducer;
an electromagnetic coil;
a smoke detector;
a body sensor; and
a magnetic switch

11. Prosthesis apparatus (100) of one of claims 1 to 10, wherein at least one of the sensor input device (103), the audio input device (102), the audio output device (104), the actuator output device (120) and/or the configuration device (126) comprises a wireless interface.

12. Prosthesis apparatus (100) of one of claims 1 to 11, wherein the prosthesis apparatus (100) is adapted as at least one of a headphone, an in-ear apparatus, an embedded system and/or a telephone.

13. Prosthesis apparatus (100), comprising:
a sensor input device (103);
a protocol device (119);
an emergency engine (101);
wherein the emergency engine (101) is connected to the protocol device (119) and to the sensor input device (103);
wherein the sensor input device (103) comprises an incoming call detector;
wherein the incoming call detector is adapted to detect at least on of an incoming voice call and/or a SMS;
wherein the emergency engine (101) is adapted to activate a data connection (117, 118) in the protocol device (119) if the incoming call detector detects an incoming call and/or a SMS.

14. Method for generating and receiving a call, comprising:
receiving a sensor input signal from a sensor;
converting the sensor input signal into a corresponding preconfigured sensor input data packet;
determining from the received preconfigured sensor input data packet a preconfigured emergency scenario;
composing an emergency message data packet sequence comprising a selection of the preconfigured sensor input data packet and a preconfigured filling data packet associated with the emergency scenario in order to compose an emergency message in accordance with the detected preconfigured emergency scenario and in accordance with a preconfigured user profile;
converting the emergency message packet sequence into a remote audio output signal;
providing the audio output signal to a remote audio generator.

15. Computer readable medium comprising program code which when being executed by a processor is adapted to carry out the method for generating and receiving an emergency call of claim 14.
